(19) Europäisches Patentamt
European Patent Office
Office européen des brevets

(11) **EP 4 567 491 A1**

(12) **EUROPEAN PATENT APPLICATION**
published in accordance with Art. 153(4) EPC

(43) Date of publication:
**11.06.2025 Bulletin 2025/24**

(21) Application number: **23905483.6**

(22) Date of filing: **31.10.2023**

(51) International Patent Classification (IPC):
**G02B 13/00** *(2006.01)*   **G02B 17/04** *(2006.01)*
**G02B 5/04** *(2006.01)*   **G03B 30/00** *(2021.01)*
**G03B 17/12** *(2021.01)*   **G03B 17/17** *(2021.01)*
**G02B 3/14** *(2006.01)*   **G03B 5/00** *(2021.01)*
**H04N 5/00** *(2011.01)*   **H04M 1/02** *(2006.01)*

(52) Cooperative Patent Classification (CPC):
**G02B 5/04; G02B 13/00; G02B 13/18; G02B 17/04;
G03B 17/12; G03B 17/17; G03B 30/00;** G02B 3/14;
G03B 5/00; H04M 1/02; H04N 5/00

(86) International application number:
**PCT/CN2023/128759**

(87) International publication number:
**WO 2024/131312 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022 CN 202211661120**

(71) Applicant: **Huawei Technologies Co., Ltd.
Shenzhen, Guangdong 518129 (CN)**

(72) Inventors:
• **ZHOU, Yong**
**Shenzhen, Guangdong 518129 (CN)**
• **CHEN, Hongfu**
**Shenzhen, Guangdong 518129 (CN)**

(74) Representative: **Pfenning, Meinig & Partner mbB
Patent- und Rechtsanwälte
Theresienhöhe 11a
80339 München (DE)**

(54) **LENS ASSEMBLY, CAMERA MODULE, AND ELECTRONIC DEVICE**

(57) Embodiments of this application provide a lens assembly, a camera module, and an electronic device. The lens assembly includes a first lens group, a prism, and a second lens group that are sequentially arranged from an object side to an image side. The prism has a first surface, a second surface, and a third surface. The second surface and the third surface are located on a first side of the first surface. The first lens group and the second lens group are located on a second side of the first surface. The first side is opposite to the second side. The object side and the image side are located on the second side of the first surface. A first included angle between the first surface and the second surface is equal to a second included angle between the first surface and the third surface. The first included angle is greater than 0° and less than 45°. A first reflection film is disposed on the second surface, and a second reflection film is disposed on the third surface. In this disposing manner, an upright camera module can be implemented, so that a volume of the camera module can be reduced on the premise that a long focal length is implemented.

EP 4 567 491 A1

10

L1

Object side

L2

Image side

12

13

11

111

113

First surface

$\theta_1$

$\theta_2$

115

114

Second surface

Third surface

FIG. 3

## Description

This application claims priority to Chinese Patent Application No. 202211661120.7, filed with the China National Intellectual Property Administration on December 23, 2022 and entitled "LENS ASSEMBLY, CAMERA MODULE, AND ELECTRONIC DEVICE", which is incorporated herein by reference in its entirety.

## TECHNICAL FIELD

Embodiments of this application relate to the field of optical imaging technologies, and in particular, to a lens assembly, a camera module, and an electronic device.

## BACKGROUND

A camera module has become an indispensable functional component in an electronic product such as a mobile phone, a tablet, a notebook computer, or a wearable device. Development of a light, thin, and multifunctional electronic device drives the camera module on the electronic device to gradually develop to be miniaturized and thin. However, image photographing effect and requirements are expected to be as high as those of a single-lens reflex camera, and function effect and a volume of the camera module gradually become one of important features of the electronic device.

The camera module includes a lens assembly and an image sensor. The lens assembly usually includes a plurality of lenses that are sequentially arranged along an optical axis direction. Light is emitted to the image sensor after passing through the lens assembly, to implement optical-to-electrical conversion for imaging. Therefore, performance of the lens assembly directly determines imaging performance of the camera module. As a demand for distance photographing by a camera of the electronic device becomes increasingly obvious, in a related technology, the camera module uses a "periscope" design to implement a long focal length to meet the distance photographing demand. However, the "periscope" camera module has a problem of a large volume. When the "periscope" camera module is placed in the electronic device, it is difficult to place another component in the electronic device.

Therefore, how to reduce the volume of the camera module on the premise that the long focal length is implemented becomes an urgent problem to be resolved.

## SUMMARY

Embodiments of this application provide a lens assembly, a camera module, and an electronic device, to reduce a volume of the camera module on the premise that the camera module implements a long focal length.

A first aspect of this application provides a lens assembly, including at least a first lens group, a prism, and a second lens group that are sequentially arranged from an object side to an image side. The prism has a first surface, a second surface, and a third surface. The second surface and the third surface are located on a first side of the first surface. The first lens group and the second lens group are located on a second side of the first surface. The first side is opposite to the second side. The object side and the image side are located on the second side of the first surface. A first included angle between the first surface and the second surface is equal to a second included angle between the first surface and the third surface. The first included angle is greater than 0° and less than 45°. A first reflection film is disposed on the second surface, and a second reflection film is disposed on the third surface. The first surface is configured to: transmit, to the prism, light that passes through the first lens group, reflect, to the third surface, at least a part of light that is reflected from the first reflection film to the first surface, and transmit, to the outside of the prism, light that is reflected from the second reflection film to the first surface. The first reflection film is configured to reflect, to the first surface, light that enters the prism through the first surface. The second reflection film is configured to reflect, to the first surface, light that is reflected from the first surface to the third surface.

This embodiment of this application uses the prism to refract a light path, so that the first lens group and the second lens group may be located on a same side of the prism, and a size of the lens assembly in a horizontal direction can be reduced, to implement an upright design. In this way, a volume of the lens assembly can be reduced, and a volume of the camera module can be reduced, thereby implementing miniaturization and low costs of the camera module. In addition, because the lens assembly adopts the upright design, a size of an image sensor that cooperates with the second lens group is no longer limited by thickness of an electronic device. The size of the image sensor depends on a height size or a width size of the electronic device. Therefore, the image sensor may be enlarged, and a detection target surface of the image sensor may be enlarged, so that a large target surface design can be implemented.

In a possible implementation, the prism meets a relational expression $\sin 2\theta_1 \gg 1/n$, where $\theta_1$ is the first included angle, and n is a refractive index of the prism.

In this disposing manner, it can be ensured that a total internal reflection phenomenon occurs on the light reflected by the first reflection film to the first surface, and a part of the light can be prevented from being transmitted from the first surface to the outside of the prism, thereby avoiding a waste of signal energy and a risk of stray light.

In a possible implementation, at least one of the first lens group, the second lens group, and the prism may move along a preset direction. The preset direction is parallel to an optical axis direction of the first lens group and an optical axis direction of the second lens group.

In this disposing manner, focusing can be implemented at a short object distance, thereby implementing long-focus micro-distance effect, and photographing a subtler scenario by using a long-focus camera module.

In a possible implementation, the prism is an isosceles triangle prism or an isosceles trapezoid prism, which may refract a light path, to implement an upright camera module.

In a possible implementation, the first reflection film is a metal reflection film or a dielectric reflection film. The second reflection film is a metal reflection film or a dielectric reflection film.

In a possible implementation, the first lens group has a positive focal power.

In this disposing manner, light is converged and incident to the prism through the first lens group, so that a size of the prism can be effectively reduced, and a miniaturization design of the camera module can be implemented.

In a possible implementation, a lens that is in the first lens group and that is closest to the object side has a positive focal power, and an object-side surface of the lens is a convex surface.

In this disposing manner, light can be converged, which helps increase an amount of light that enters the lens assembly.

In a possible implementation, the first lens group meets a relational expression $0.05 \ll TTL1/f \ll 0.3$, where TTL1 is a total optical length of the first lens group, and $f$ is a focal length of the lens assembly.

In this disposing manner, a total system length of the lens assembly can be reduced. A smaller value indicates a smaller total system length.

In a possible implementation, the first lens group meets a relational expression $0.5 \ll L/TTL1 \ll 3$, where L is a relative maximum movement amount of the first lens group and the second lens group at different object distances.

In this disposing manner, occupied space required by the lens assembly can be reduced. A smaller value indicates a smaller micro-distance movement journey and less occupied space.

In a possible implementation, the second lens group meets a relational expression $0.05 \ll TTL2/f \ll 0.3$, where TTL2 is a total optical length of the second lens group.

In this disposing manner, a total system length of the lens assembly can be reduced. A smaller value indicates a smaller total system length.

In a possible implementation, the first lens group includes at least two lenses that have focal powers. The second lens group includes at least one lens that has a focal power.

A second aspect of this application provides a camera module. The camera module includes at least an image sensor and the lens assembly according to any one of the first aspect. The image sensor is located on a side that is of the second lens group of the lens assembly and that faces the image side. The upright lens assembly is included. Therefore, a design of miniaturization, a large target surface, and low costs can be implemented for the camera module.

A third aspect of this application provides an electronic device. The electronic device includes at least a housing and the camera module according to the second aspect. The camera module is disposed on the housing. The camera module is included, and the camera module features low costs, better imaging quality, and ultra-thin performance. This helps reduce costs of the electronic device, improve photographing performance of the electronic device, and facilitates a thinning design of the electronic device.

## BRIEF DESCRIPTION OF DRAWINGS

FIG. 1 is a diagram of a structure of an electronic device according to an embodiment of this application;

FIG. 2 is a sectional view of a camera module in a related technology;

FIG. 3 is a diagram of a structure of a camera module according to an embodiment of this application;

FIG. 4 is a diagram of a structure of a first prism according to an embodiment of this application;

FIG. 5 is a diagram of a structure of a second prism according to an embodiment of this application;

FIG. 6 is a top view of a third prism according to an embodiment of this application;

FIG. 7 is a top view of a fourth prism according to an embodiment of this application;

FIG. 8 is a diagram of a simulation structure of another camera module in a short object distance state according to an embodiment of this application;

FIG. 9 is a diagram of a simulation structure of another camera module in a long object distance state according to an embodiment of this application; and

FIG. 10 is a diagram of a spherical aberration curve of a lens assembly according to the embodiment shown in FIG. 8.

Reference numerals:

100: electronic device;
10: camera module;
11: lens assembly;
111: first lens group; 1111: first lens; 1112: second lens; 1113: third lens;
112: prism;
113: second lens group; 1131: fourth lens; 1132: fifth lens;
114: first reflection film;
115: second reflection film;
12: image sensor;
13: light filter;
20: housing;
X: width direction;
Y: thickness direction;
Z: height direction.

## DESCRIPTION OF EMBODIMENTS

Terms used in implementations of this application are only used to explain specific embodiments of this application, but are not intended to limit this application.

For ease of understanding, related technical terms in embodiments of this application are first explained and described.

A focal length, also referred to as a focal length, is a measurement manner for measuring convergence or divergence of light in an optical system, and means a vertical distance from an optical center of a lens or a lens group to a focal plane when a clear image of an infinite scene is formed on the focal plane through the lens or the lens group. From a practical perspective, the focal power may be understood as a distance from a center of a lens assembly to an imaging plane.

A total track length (Total Track Length, TTL for short) is a total length from a vertex of a first lens that is disposed adjacent to an object side of a lens assembly to an imaging surface of the lens assembly, and is also referred to as a total optical length.

Object-side space, bounded by a lens, is space in which a photographed object is located.

An object side, bounded by a lens assembly, is a side on which a photographed object is located. A surface that is of a lens and that faces the object side is an object-side surface of the lens.

An image side is a side on which an image of a photographed object is located. A surface that is of a lens and that faces the image side is an image-side surface.

Focal power represents a refraction capability of a lens on an incident parallel light beam.

Positive focal power represents that a lens has a positive focal length and has effect of converging light.

Negative focal power represents that a lens has a negative focal length and has effect of diverging light.

A target surface means a photosensitive surface of an image sensor. A larger target surface indicates a larger amount of light sensed by the image sensor and a larger image height of imaging.

An electronic device provided in an embodiment of this application may include but is not limited to an electronic device with a camera module, such as a mobile phone, a tablet computer, a notebook computer, an ultra-mobile personal computer (ultra-mobile personal computer, UMPC), a handheld computer, an intercom, a netbook, a POS machine, a personal digital assistant (personal digital assistant, PDA), a wearable device, a virtual reality device, or a vehicle-mounted apparatus.

In this embodiment of this application, an example in which the electronic device is a mobile phone is used. The mobile phone may be a bar-type mobile phone, or the mobile phone may be a foldable mobile phone. Specifically, the following uses an example in which the electronic device is the bar-type mobile phone for description.

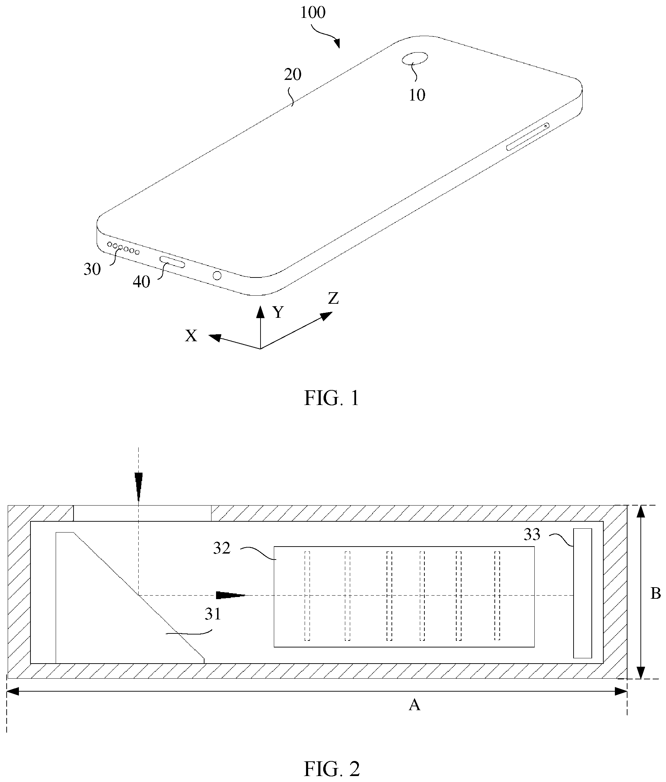

FIG. 1 is a diagram of a structure of an electronic device according to an embodiment of this application.

Refer to FIG. 1. The electronic device 100 may include a housing 20 and a camera module 10. The camera module 10 may be disposed on the housing 20, and the camera module 10 is configured to implement a photographing function.

The camera module 10 may be located on a front side (a side that has a display screen) of the electronic device 100, and is configured to take a selfie or photograph another object. Alternatively, with reference to FIG. 1, the camera module 10 may also be located on a back side (a side that backs a display screen) of the electronic device 100, and is configured to photograph another object, or certainly may also be configured to take a selfie.

A quantity of the camera modules 10 included in the electronic device 100 may be one, or the quantity of the camera modules 10 may be multiple, to meet different photographing requirements.

The electronic device 100 may further include another structural member. For example, still with reference to FIG. 1, a speaker 30 may be further disposed on the housing 20 of the electronic device 100. The speaker 30 may be configured to play audio and the like of the electronic device 100. The housing 20 of the electronic device 100 may further be provided with a data interface 40. The data interface 40 may be configured to supply power to the electronic device 100. Alternatively, the data interface 40 may also be configured to connect the electronic device 100 to a headset, an external multimedia device (for example, an external camera or an external projection device), or the like.

Certainly, in some other examples, the electronic device 100 may further include another structural member, for example, a sensor, a processor, a circuit board, and a drive structure, to complete a function of the electronic device 100. The structural member is not limited in this embodiment of this application.

Usually, the camera module 10 may include a lens assembly 11 and an image sensor 12. Light may enter the camera module 10 from the lens assembly 11. Specifically, light reflected from a photographed object may enter the lens assembly 11. After the light enters the lens assembly 11, and the lens assembly 11 adjusts and controls a light path, a light image is generated, and the light is irradiated on a photosensitive surface of the image sensor 12. The image sensor 12 can implement an optical-to-electrical conversion function, and the image sensor 12 receives the light image and converts the light image into an electrical signal for imaging display.

The camera module 10 may further include an image processor, a memory, and the like. The image sensor 12 may transmit the electrical signal to the image processor and the memory for processing, and then display an image of the photographed object through a display screen of the electronic device 100.

Optical performance of the lens assembly 11 greatly affects imaging quality and effect of the camera module 10. For example, a quantity of apertures of the lens assembly 11 affects functions such as night scene photographing, video recording, background blurring, and image capturing. In other words, the camera module 10 using a wide aperture has better imaging quality and imaging effect in scenarios such as night scene photographing, video recording, background blurring, and image capturing.

A size of a target surface of the lens assembly 11 is also one of important factors that affect imaging quality. The camera module 10 with a large target surface helps improve imaging brightness and resolution of the camera module 10, and obtain better imaging quality.

A volume of the camera module 10 affects a thinning design of the electronic device 100. A smaller volume of the camera module 10 requires less occupied space. On one hand, difficulty in disposing the camera module 10 can be reduced. On the other hand, it is easier to place another component in the electronic device 100.

FIG. 2 is a sectional view of a camera module in a related technology. As a demand for long-distance photographing by a camera of an electronic device becomes increasingly obvious, in a related technology, the camera module uses a "periscope" design. As shown in FIG. 2, an image sensor 33 is located at a rear end of an optical system 32. A reflective prism 31 is introduced at a front end of the optical system 32 to fold an optical axis (for example, a dashed line with an arrow in the figure). Lenses of the optical system 32 are placed in parallel to implement a long focal length design, so that the long-distance photographing demand can be met. However, a volume of the "periscope" camera module is large. When the "periscope" camera module is placed in the electronic device, much space of the electronic device is occupied, and it is difficult to place another component in the electronic device. In addition, when the "periscope" camera module is placed in the electronic device, a horizontal size A of the "periscope" camera module is a size in a height direction of the electronic device, and a vertical size B of the "periscope" camera module is a size in a thickness direction of the electronic device. Because thickness of the electronic device is small, the vertical size B of the "periscope" camera module cannot be excessively large. Consequently, a size of the image sensor is limited by the vertical size B, a target surface of the image sensor cannot be large, and a large target surface design cannot be implemented. Therefore, how to reduce the volume of the camera module on the premise that the long focal length is implemented becomes an urgent problem to be resolved.

In view of this, an embodiment of this application provides the lens assembly 11 that adopts an upright design, to implement the camera module 10 with the long focal length. In addition, on the premise that the long focal length is implemented, the volume of the camera module 10 can be reduced, the design requirement of the large target surface can be met, and the camera module 10 further has low costs.

The following describes in detail, with reference to the accompanying drawings, the lens assembly 11 and the camera module 10 that includes the lens assembly 11 provided in embodiments of this application.

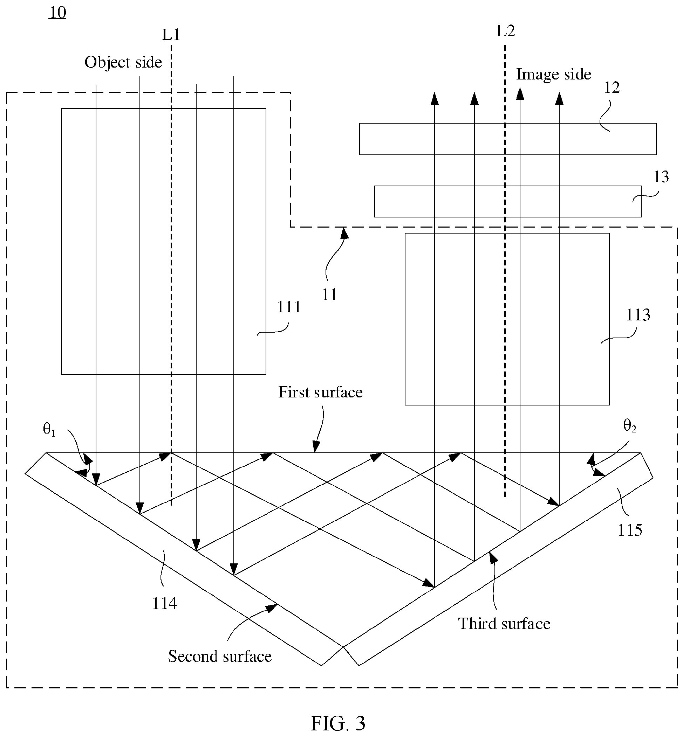

FIG. 3 is a diagram of a structure of a camera module according to an embodiment of this application. Refer to FIG. 3. The camera module 10 provided in embodiments of this application includes the lens assembly 11 and the image sensor 12. The image sensor 12 is located at an end that is of the lens assembly 11 and that is close to an image side. A photosensitive surface (may also be referred to as an imaging surface) of the image sensor 12 faces a second lens group 113 of the lens assembly 11. Light that enters the camera module 10 from the lens assembly 11 may be irradiated on the photosensitive surface of the image sensor 12 after the light passes through the lens assembly 11, to implement imaging of the light.

The image sensor 12 may be a charge-coupled device (charge-coupled device, CCD), or may be a complementary metal oxide semiconductor (complementary metal oxide semiconductor, CMOS), or may be another device that can implement the optical-to-electrical conversion function.

Still refer to FIG. 3. The camera module 10 may further include a light filter 13. The light filter 13 may be located between the lens assembly 11 and the image sensor 12. Light that passes through the lens assembly 11 passes through the light filter 13, and then is irradiated on the photosensitive surface of the image sensor 12. The light filter 13 has a light filtering function, and can enable light within a specific wavelength range to pass through, thereby filtering out stray light that is not conducive to imaging, and helping improve imaging quality.

The camera module 10 may further include a lens cone (not shown in the figure). The lens assembly 11, the light filter 13, the image sensor 12, and the like may be disposed in the lens cone.

As shown in FIG. 3, the lens assembly 11 may include a first lens group 111, a prism 112, and a second lens group 113 that are sequentially arranged from an object side to an image side. The first lens group 111 and the second lens group 113 are located on a same side of the prism 112. The first lens group 111 is configured to connect object-side space and the prism 112. The second lens group 113 is configured to connect the image sensor 12 and the prism 112. Light that enters the camera module 10 enters the prism 112 through the first lens group 111, and then enters the second lens group 113 through the prism 112. The light that passes through the second lens group 113 may be irradiated on the photosensitive surface of the image sensor 12.

It can be learned from FIG. 3 that because the prism 112 can refract a light path, the first lens group 111 and the second lens group 113 may be located on the same side of the prism 112, thereby reducing a size of the lens assembly 11 in a horizontal direction, helping reduce a volume of the camera module 10, and implementing miniaturization and low costs. When the camera module 10 is disposed in the electronic device 100, space occupied by the camera module 10 is reduced, and it is easier to place another component in the electronic device 100.

It can be learned from FIG. 3 that because the second lens group 113 and the first lens group 111 are located on the same side of the prism 112, it is equivalent to disposing the first lens group 111 and the second lens group 113 in parallel. Therefore, the image sensor 12 that cooperates with the second lens group 113 may be disposed in parallel with the first lens group 111. When the camera module 10 is disposed in the electronic device 100, the first lens group 111 faces a light inlet. Therefore, a horizontal size of the camera module 10 is a size of the camera module 10 in a height direction or a width direction of the electronic device 100. A vertical size of the camera module 10 is a size of the camera module 10 in a thickness direction of the electronic device 100. Therefore, thickness of the image sensor 12 may be limited by thickness of the electronic device 100. However, a length and a width of the image sensor 12 may not be limited by the thickness of the electronic device 100. Thus, the size of the image sensor 12 may be enlarged, and the photosensitive surface of the image sensor 12 may be enlarged, to implement the large target surface design.

As shown in FIG. 3, the prism 112 has a first surface, a second surface, and a third surface. The second surface and the third surface are located on a first side of the first surface. The first lens group 111 and the second lens group 113 are located on a second side of the first surface. The first side is opposite to the second side. The object side and the image side are located on the second side of the first surface. A first included angle ($\theta_1$ shown in FIG. 3) between the first surface and the second surface is equal to a second included angle ($\theta_2$ shown in FIG. 3) between the first surface and the third surface. The first included angle is greater than 0° and less than 45°. A first reflection film 114 is disposed on the second surface, and a second reflection film 115 is disposed on the third surface. In this disposing manner, it can be ensured that light that passes through the first lens group 111 and enters the prism 112 may enter the second lens group 113 after the light is refracted by the prism 112, thereby achieving an objective of refracting a light path.

The first included angle is made equal to the second included angle, so that an optical axis of an incident light beam of the prism 112 can be ensured to be parallel to an optical axis of an emergent light beam of the prism 112, thereby avoiding chromatic aberration that is caused by dispersion effect of the prism 112, and that affects imaging. In addition, this further helps ensure that the photosensitive surface of the image sensor 12 is parallel to the light inlet. The optical axis of the incident light beam of the prism 112 is equivalent to an optical axis (for example, a dashed line L1 in FIG. 3) of the first lens group 111. The optical axis of the emergent light beam of the prism 112 is equivalent to an optical axis (for example, a dashed line L2 in FIG. 3) of the second lens group 113.

The first included angle is set between 0° and 45°, to ensure that a light beam reflected by the first reflection film 114 can reach the first surface. In addition, because the first included angle is equal to the second included angle, the second included angle is also between 0° and 45°, which can also ensure that a light beam reflected by the second reflection film 115 can reach the first surface.

As shown in FIG. 3, when light on the object side enters the lens assembly 11, the light first enters the first lens group 111, and then the light that passes through the first lens group 111 is transmitted to the prism 112 through the first surface. Then, the light that passes through the first surface is reflected by the first reflection film 114 on the second surface to the first surface. Then, the first surface reflects, to the third surface, the light reflected from the first reflection film 114 to the first surface. Immediately, the light that is reflected from the first surface to the third surface is reflected by the second reflection film 115 to the first surface. Finally, the light that is reflected by the second reflection film 115 to the first surface is transmitted to the outside of the prism 112 through the first surface and enters the second lens group 113. The light that is transmitted to the outside of the prism 112 through the first surface sequentially passes through the second lens group 113 and the light filter 13 and then is irradiated on the image sensor 12.

It should be noted that when an incident angle, on the first surface, of the light reflected by the first reflection film 114 to the first surface is small, a part of the light reflected by the first reflection film 114 to the first surface is transmitted to the outside of the first surface through the first surface. Therefore, the first surface may reflect, to the third surface, at least a part of the light reflected from the first reflection film 114 to the first surface, to ensure that the light that passes through the first lens group 111 can enter the second lens group 113 through the prism 112.

It should be noted that the first surface may be a planar surface or a curved surface. When the first surface is the planar surface, an optical axis direction of the first lens group 111 and an optical axis direction of the second lens group 113 are perpendicular to the first surface.

In a possible implementation, the prism 112 meets a relational expression $\sin 2\theta_1 \gg 1/n$, where $\theta_1$ is the first included angle, and n is a refractive index of the prism 112.

Because when the incident angle, on the first surface, of the light reflected by the first reflection film 114 to the first surface is small, a part of the light reflected by the first reflection film 114 to the first surface is transmitted to the outside of the first surface through the first surface, which may cause a waste of signal energy and a risk of stray light. Therefore, the relational expression $\sin 2\theta_1 \gg 1/n$ is used, so that the incident angle, on the first surface, of the light reflected by the first reflection film 114 to the first surface is greater than or equal to a critical angle. In this way, it is ensured that a total internal reflection phenomenon occurs on the light reflected by the first reflection film 114 to the first surface, and a part of the light can be prevented from being transmitted from the first surface to the outside of the prism 112, thereby avoiding a waste of signal energy and a risk of stray light.

In a possible implementation, the first reflection film 114 is a metal reflection film or a dielectric reflection film. The second reflection film 115 is a metal reflection film or a dielectric reflection film.

A material of the metal reflection film may include but is not limited to at least one of the following materials: silver, aluminum, copper, and gold. The dielectric reflection film may be a non-metallic composite film. In addition, a material of the first reflection film 114 may be the same as or different from that of the second reflection film 115.

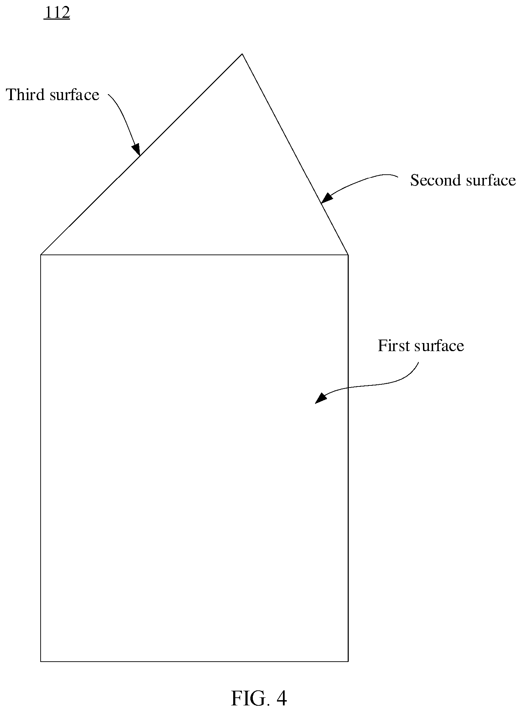

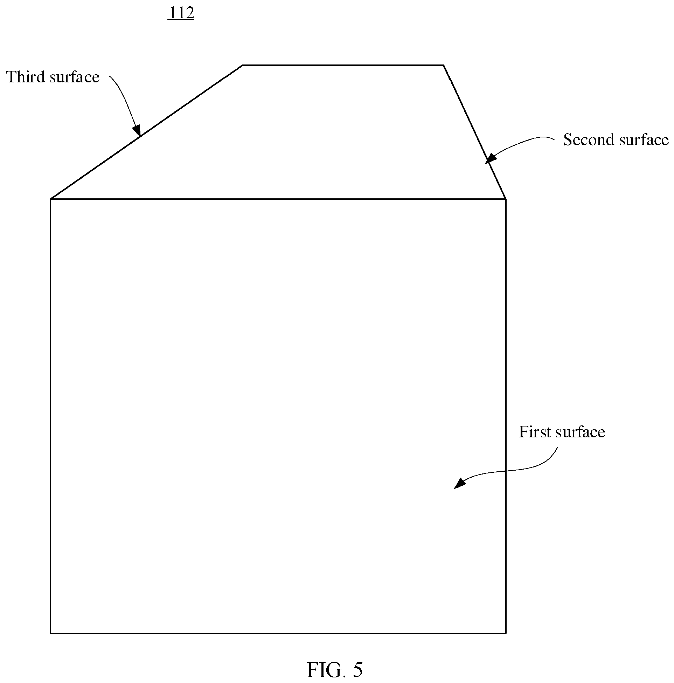

In a possible implementation, the prism 112 is an isosceles triangle prism (for example, as shown in FIG. 4) or an isosceles trapezoid prism (for example, as shown in FIG. 5), which may refract a light path, to implement an upright camera module 10. FIG. 4 is a diagram of a structure of a first prism according to an embodiment of this application. FIG. 5 is a diagram of a structure of a second prism according to an embodiment of this application.

It should be noted that, in addition to being the isosceles triangle prism or the isosceles trapezoid prism, the prism 112 may alternatively be a polygonal prism such as a pentagon prism or a hexagon prism, provided that the prism 112 has the first surface, the second surface, and the third surface, the first surface, the second surface, and the third surface form an isosceles triangle relationship, and $\theta_1 = \theta_2$ and $0° < \theta_1°$ are met.

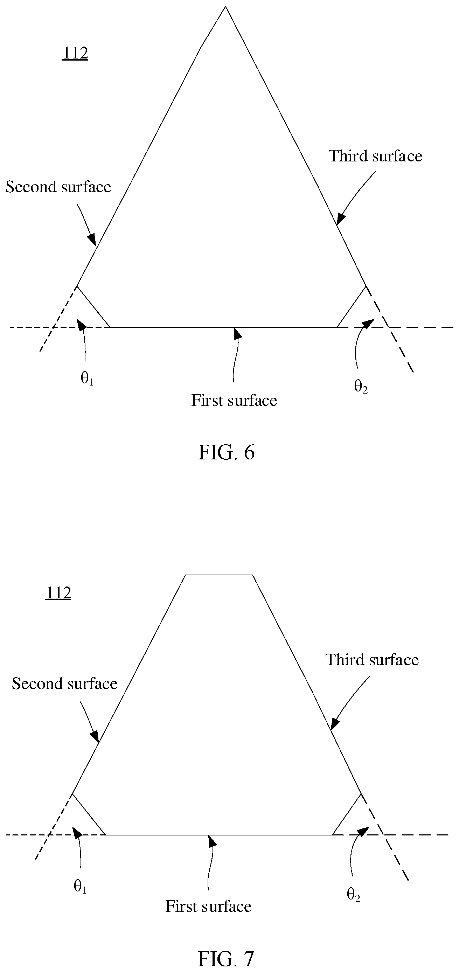

At least two of the first surface, the second surface, and the third surface may intersect, or the first surface, the second surface, and the third surface do not intersect with each other, provided that the isosceles triangle relationship is formed. For example, as shown in FIG. 6, the second surface intersects with the third surface, and the first surface does not intersect with the second surface and the third surface. FIG. 6 is a top view of a third prism according to an embodiment of this application. Alternatively, for example, as shown in FIG. 7, any two of the first surface, the second surface, and the third surface do not intersect. FIG. 7 is a top view of a fourth prism according to an embodiment of this application.

In a possible implementation, at least one of the first lens group 111, the second lens group 113, and the prism 112 may move along a preset direction. The preset direction is parallel to the optical axis direction (for example, L1 in FIG. 3) of the first lens group 111 and the optical axis direction (for example, L2 in FIG. 3) of the second lens group 113. In this disposing manner, focusing can be implemented at a short object distance, thereby implementing long-focus micro-distance effect, and photographing a subtler scenario by using a long-focus camera module 10.

It may be understood that at least one of the first lens group 111, the second lens group 113, and the prism 112 may be moved at a short-distance object distance. For example, the first lens group 111 and the second lens group 113 are moved, and both the first lens group 111 and the second lens group 113 are moved, relative to the prism 112, along the preset direction, to implement the long-focus micro-distance effect.

In a possible implementation, the first lens group 111 has a positive focal power. In this disposing manner, light is converged and incident to the prism 112 through the first lens group 111, so that a size of the prism 112 can be effectively reduced, and a miniaturization design of the camera module 10 can be implemented.

In a possible implementation, a lens that is in the first lens group 111 and that is closest to the object side has a positive focal power, and an object-side surface of the lens is a convex surface. In this disposing manner, light can be converged, which helps increase an amount of light that enters the lens assembly 11.

It may be understood that a lens other than the lens that is closest to the object side in the first lens group 111 may have the positive focal power or the negative focal power. This is not limited herein.

In a possible implementation, the first lens group 111 meets a relational expression 0.05 « TTL1/$f$ « 0.3, where TTL1 is a total optical length of the first lens group 111, and $f$ is a focal length of the lens assembly 11. In this disposing manner, a total system length of the lens assembly 11 can be reduced.

A specific ratio of TTL1/$f$ is not limited herein. For example, the ratio of TTL1/$f$ may include but is not limited to 0.055, 0.06, 0.065, 0.067, 0.07, 0.08, 0.09, 0.1, 0.15, 0.18, 0.19, 0.2, 0.21, 0.22, 0.25, 0.256, 0.287, 0.289, 0.297, and the like.

In a possible implementation, the first lens group 111 meets a relational expression 0.5 « L/TTL1 « 3, where L is a relative maximum movement amount of the first lens group 111 and the second lens group 113 at different object distances. In this disposing manner, occupied space required by the lens assembly 11 can be reduced.

A specific ratio of L/TTL1 is not limited herein. For example, the ratio of L/TTL1 may include but is not limited to 0.6, 0.65, 0.7, 0.8, 0.9, 1.0, 1.1, 1.2, 1.25, 1.3, 1.39, 1.5, 1.9, 2.0, 2.5, 2.6, 2.7, 2.9, 2.95, 2.987, and the like.

It should be noted that the relative maximum movement amount is a maximum movement amount of relative movement of the first lens group 111 and the second lens group 113 in an optical axis direction. When the first lens group 111 and the second lens group 113 move relative to each other in the optical axis direction, at least one of the first lens group 111 and the second lens group 113 moves along the optical axis direction.

In a possible implementation, the second lens group 113 meets a relational expression 0.05 « TTL2/f « 0.3, where TTL2 is a total optical length of the second lens group 113. In this disposing manner, a total system length of the lens assembly 11 can be reduced.

A specific ratio of TTL2/$f$ is not limited herein. For example, the ratio of TTL2/$f$ may include but is not limited to 0.055, 0.06, 0.065, 0.067, 0.07, 0.08, 0.09, 0.1, 0.15, 0.18, 0.19, 0.2, 0.21, 0.22, 0.25, 0.256, 0.287, 0.289, 0.297, and the like.

In a possible implementation, the first lens group 111 includes at least two lenses that have focal powers. The second lens group 113 includes at least one lens that has a focal power. In this disposing manner, it can be ensured that light enters the prism 112 through the first lens group 111, and the light that passes through the prism 112 can be irradiated on the image sensor 12 through the second lens group 113.

The following, with reference to specific embodiments, describes a structure and performance of the lens assembly 11 provided in this application.

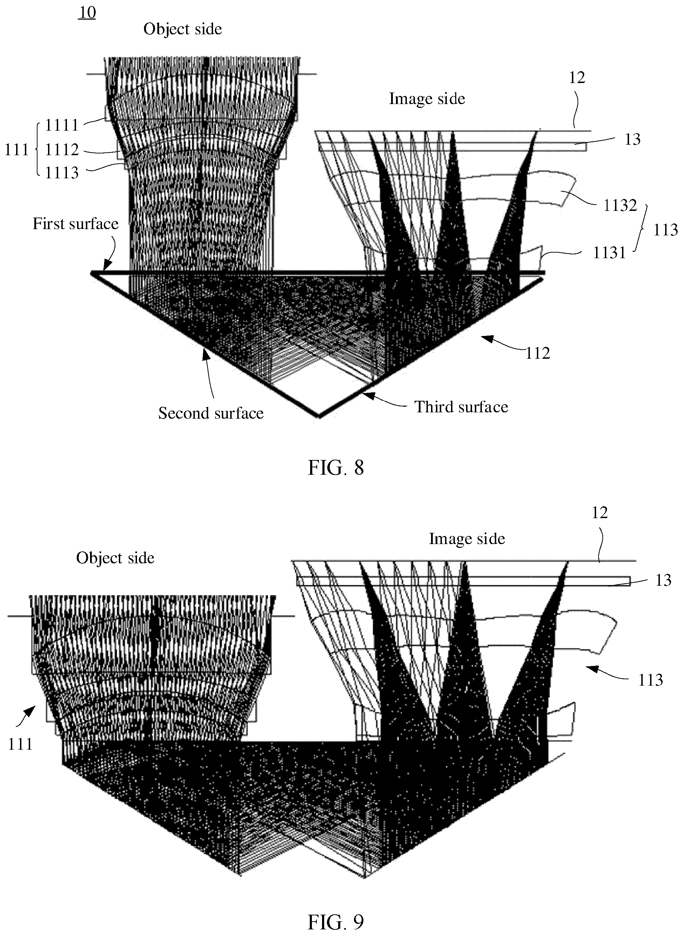

FIG. 8 is a diagram of a simulation structure of another camera module in a short object distance state according to an embodiment of this application. FIG. 9 is a diagram of a simulation structure of another camera module in a long object distance state according to an embodiment of this application.

In this embodiment of this application, as shown in FIG. 8 and FIG. 9, the camera module 10 includes a lens assembly 11, an image sensor 12, and a light filter 13. The light filter 13 is located between the second lens group 113 and the image sensor 12. During use, light is incident from the first lens group 111 to the prism 112. Emergent light of the prism 112 sequentially passes through the second lens group 113 and the light filter 13, and finally is converged to the image sensor 12.

The prism 112 is an isosceles prism 112. A first reflection film 114 is disposed on a second surface of the prism 112, and a second reflection film 115 is disposed on a third surface of the prism 112. In addition, the first included angle is 30°, so that light reflected by the first reflection film 114 and the second reflection film 115 can reach a first surface. In addition, a refractive index n of the prism 112 is equal to 1.7, sin $2\theta_1$ is approximately equal to 0.866, and 1/$n$ is approximately equal to 0.588, which can ensure that a total internal reflection phenomenon occurs on the light reflected by the first reflection film 114 to the first surface.

The first lens group 111 includes three lenses that have a focal power. The second lens group 113 includes two lenses that have a focal power.

When the camera module 10 photographs a target at different object distances, the first lens group 111 moves along an optical axis direction of the first lens group 111, to implement focusing and ensure clarity.

The first lens group 111 is a lens group that has a positive focal power, and may compress and converge a light beam into the prism 112, so that a size of the prism 112 can be effectively reduced.

A lens that is in the first lens group 111 and that is closest to an object-side surface has a positive focal power, and the object-side surface of the lens is a convex surface.

A total optical length of the first lens group 111 and a focal length of the lens assembly 11 meet: TTL1/$f \approx$ 0.13.

A total optical length of the second lens group 113 and the focal length of the lens assembly 11 meet: TTL2/$f \approx$ 0.16.

At different object distances, a relative maximum movement amount L of the first lens group 111 and the second lens group 113 and the total optical length of the first lens group 111 meet: L/TTL1 $\approx$ 1.43.

Table 1 shows optical parameters of each optical element in the camera module 10 provided in this embodiment.

| Lens group | Lens | | | R | D1 | Nd | VD |
|---|---|---|---|---|---|---|---|
| | stop | / | / | / | / | / | / |
| First lens group 111 | L1 | S1 | Spherical surface | 4.49E+00 | 1.28E+00 | 1.57 | 61 |
| | | S2 | Spherical surface | 5.01E+01 | 1.01E-01 | | |
| | L2 | S1 | Aspheric surface | 5.05E+00 | 3.42E-01 | 1.67 | 19.2 |
| | | S2 | Aspheric surface | 3.32E+00 | 1.12E-01 | | |
| | L3 | S1 | Aspheric surface | 4.66E+00 | 3.40E-01 | 1.54 | 56.1 |
| | | S2 | Aspheric surface | 4.90E+00 | 3.62E+00 | | |
| Prism 112 | | Equivalent parallel plate | | | Equivalent thickness: 11.5 | 1.75 | 64 |
| Second lens group 113 | L4 | S1 | Aspheric surface | 4.49E+00 | 3.40E-01 | 1.54 | 56.1 |
| | | S2 | Aspheric surface | 5.01E+01 | 1.67E+00 | | |
| | L5 | S1 | Aspheric surface | 5.05E+00 | 6.16E-01 | 1.54 | 56.1 |
| | | S2 | Aspheric surface | 3.32E+00 | 8.10E-01 | | |
| | | S2 | Aspheric surface | 4.66E+00 | 3.40E-01 | | |
| | IR | S1 | Spherical surface | inf | 0.21 | 1.5182 | 64.166 |
| | | S2 | Spherical surface | inf | 0.358 | 74 | 41 |
| | Image surface | Spherical surface | | inf | 0 | | |

L1 is a first lens 1111, L2 is a second lens 1112, L3 is a third lens 1113, L4 is a fourth lens 1131, L5 is a fifth lens 1132, and IR is the light filter 13.

R is a curvature radius of an optical element (such as the lens or the light filter 13) at a position corresponding to an optical axis.

D1 is thickness of an optical element in an optical axis direction or thickness of an air gap between optical elements.

Nd is a refractive index of each optical element irradiated by a d line. VD is an Abbe number of an optical element.

Table 2 shows a conic coefficient and an aspheric coefficient of each lens in the camera module 10 according to this embodiment.

| | | Conic coefficient K | A2 | A4 | A6 | A8 | A10 | A12 | A14 |
|---|---|---|---|---|---|---|---|---|---|
| L1 | S1 | 0.00E+00 | 0 | 0 | 0 | 0 | 0 | 0 | 0 |
| | S2 | 0.00E+00 | 0 | 0 | 0 | 0 | 0 | 0 | 0 |
| L2 | S1 | 0.00E+00 | 0.00E+00 | -4.29E-03 | -1.83E-02 | 5.17E-02 | -7.29E-02 | 6.40E-02 | -3.79E-02 |
| | S2 | 2.98E-01 | 0.00E+00 | -4.27E-02 | 1.30E-01 | -3.20E-01 | 5.59E-01 | -6.73E-01 | 5.60E-01 |
| L3 | S1 | 0 | 0.00E+00 | -5.42E-02 | 2.52E-01 | -6.38E-01 | 1.06E+00 | -1.20E+00 | 9.40E-01 |
| | S2 | 0.00E+00 | 0.00E+00 | -2.42E-02 | 1.63E-01 | -4.54E-01 | 7.95E-01 | -9.36E-01 | 7.70E-01 |
| L4 | S1 | 0.00E+00 | 0.00E+00 | -1.63E-01 | 3.96E-01 | -5.90E-01 | 5.96E-01 | -4.27E-01 | 2.24E-01 |
| | S2 | -1.00E+00 | 0.00E+00 | -1.88E-01 | 3.99E-01 | -5.25E-01 | 4.65E-01 | -2.90E-01 | 1.32E-01 |
| L5 | S1 | -1.00E+00 | 0.00E+00 | -2.89E-01 | 3.36E-01 | -2.76E-01 | 1.54E-01 | -6.06E-02 | 1.74E-02 |
| | S2 | 0.00E+00 | 0.00E+00 | -3.98E-01 | 5.08E-01 | -4.58E-01 | 2.86E-01 | -1.27E-01 | 4.08E-02 |

| | | A16 | A18 | A20 | A22 | A24 | A26 | A28 | A30 |
|---|---|---|---|---|---|---|---|---|---|
| | | Conic coefficient K | A2 | A4 | A6 | A8 | A10 | A12 | A14 |
| L1 | S1 | 0 | 0 | 0 | 0 | 0 | 0 | 0 | 0 |
| | S2 | 0 | 0 | 0 | 0 | 0 | 0 | 0 | 0 |
| L2 | S1 | 1.57E-02 | -4.65E-03 | 9.90E-04 | -1.50E-04 | 1.58E-05 | -1.09E-06 | 4.45E-08 | -8.05E-10 |
| | S2 | -3.28E-01 | 1.37E-01 | -4.10E-02 | 8.72E-03 | -1.29E-03 | 1.26E-04 | -7.28E-06 | 1.90E-07 |
| L3 | S1 | -5.24E-01 | 2.10E-01 | -6.03E-02 | 1.24E-02 | -1.76E-03 | 1.66E-04 | -9.26E-06 | 2.32E-07 |
| | S2 | -4.52E-01 | 1.92E-01 | -5.92E-02 | 1.31E-02 | -2.01E-03 | 2.06E-04 | -1.25E-05 | 3.42E-07 |
| L4 | S1 | -8.70E-02 | 2.53E-02 | -5.45E-03 | 8.59E-04 | -9.62E-05 | 7.22E-06 | -3.25E-07 | 6.66E-09 |
| | S2 | -4.48E-02 | 1.14E-02 | -2.17E-03 | 3.05E-04 | -3.06E-05 | 2.07E-06 | -8.44E-08 | 1.57E-09 |
| L5 | S1 | -3.63E-03 | 5.31E-04 | -4.92E-05 | 2.04E-06 | 9.86E-08 | -1.80E-08 | 9.42E-10 | -1.82E-11 |
| | S2 | -9.48E-03 | 1.60E-03 | -1.94E-04 | 1.68E-05 | -1.00E-06 | 3.97E-08 | -9.27E-10 | 9.72E-12 |

It can be learned from Table 2 that the first lens to the fifth lens include eight aspheric surfaces in total. That is, the lens assembly 11 includes four aspheric surface lenses. All even aspheric surface types z of the lenses in the lens assembly 11 may be limited by using but not limited to the following aspheric formula:

$$z = \frac{cr^2}{1 + \sqrt{1 - Kc^2r^2}} + \sum_i Air^i$$

z is a vector height of the aspheric surface, r is a radial coordinate of the aspheric surface, c is a spherical curvature of a vertex of the aspheric surface, K is the conic coefficient, and Ai represents an $i^{th}$ order aspheric coefficient. Each lens may be simulated based on the obtained aspheric surface types and the like. Finally, the camera module 10 shown in FIG. 8 is obtained.

For optical parameters of the camera module 10 that includes the foregoing lenses, refer to Table 3.

Table 3 shows optical parameters of the camera module 10 provided in this embodiment.

| Focal length F | 16.5 mm |
|---|---|
| F value | 3.0 |

(continued)

| Half FOV | 15° |
|---|---|
| IH | 8 mm |
| Short-distance focusing object distance | 71 mm |
| Short-distance magnification rate | 0.3 |
| Total system height | 8.9 mm |
| Design wavelength | 650 nm, 610 nm, 555 nm, 510 nm, and 470 nm |

It can be learned from Table 3 that the camera module 10 provided in this embodiment of this application features a large target surface, and can implement long-focus micro-distance effect.

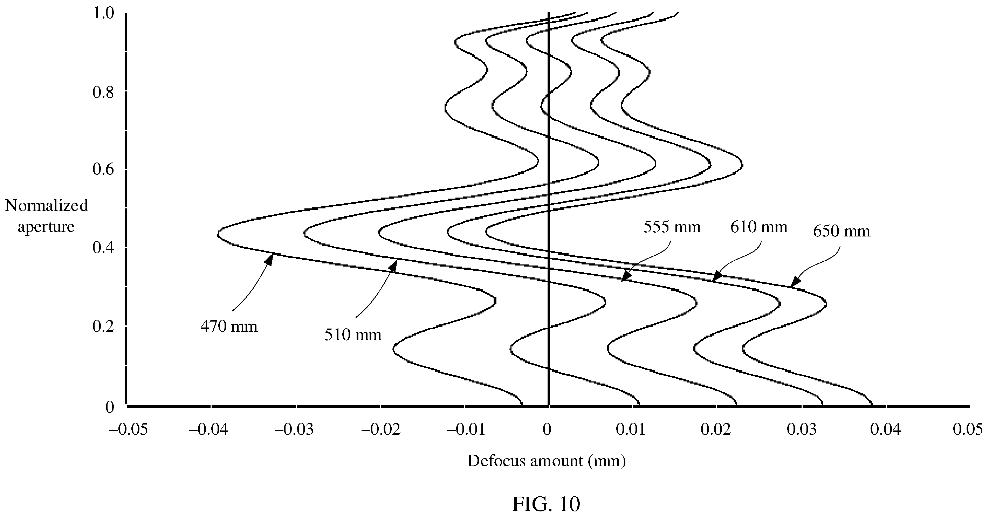

FIG. 10 is a diagram of a spherical aberration curve of a lens assembly 11 according to the embodiment shown in FIG. 8. A horizontal coordinate represents a defocus amount (unit: mm). A vertical coordinate represents a normalized aperture. Different curves from left to right represent different wavelengths that are 470 nm, 510 nm, 555 nm, 610 nm, and 650 nm. The curves represent deviation (the defocus amount) between an optimal image surface and an actual image surface of a system with different aperture bands. Smaller absolute values represent better aberration correction effect of the system and higher imaging quality of the system. According to results in FIG. 10, within a current full wavelength full aperture band range, all spherical aberration is less than or equal to 0.04 mm, and the system aberration is well corrected.

In descriptions of embodiments of this application, it should be noted that, unless otherwise clearly specified and limited, the terms "installation", "connection to", and "connection" should be understood in a broad sense. For example, the connection may be a fixed connection, may be an indirect connection by using an intermediate medium, or may be an internal connection between two elements or an interaction relationship between two elements. For persons of ordinary skill in the art, specific meanings of the foregoing terms in embodiments of this application may be understood based on a specific situation.

In the specification, claims, and accompanying drawings of embodiments of this application, the terms "first", "second", "third", "fourth", and so on (if existent) are intended to distinguish between similar objects but do not necessarily indicate a specific order or sequence.

**Claims**

1. A lens assembly, comprising a first lens group, a prism, and a second lens group that are sequentially arranged from an object side to an image side, wherein

    the prism has a first surface, a second surface, and a third surface, the second surface and the third surface are located on a first side of the first surface, the first lens group and the second lens group are located on a second side of the first surface, the first side is opposite to the second side, and the object side and the image side are located on the second side of the first surface;
    a first included angle between the first surface and the second surface is equal to a second included angle between the first surface and the third surface, the first included angle is greater than 0° and less than 45°, a first reflection film is disposed on the second surface, and a second reflection film is disposed on the third surface;
    the first surface is configured to: transmit, to the prism, light that passes through the first lens group, reflect, to the third surface, at least a part of light that is reflected from the first reflection film to the first surface, and transmit, to the outside of the prism, light that is reflected from the second reflection film to the first surface;
    the first reflection film is configured to reflect, to the first surface, light that enters the prism through the first surface; and
    the second reflection film is configured to reflect, to the first surface, light that is reflected from the first surface to the third surface.

2. The lens assembly according to claim 1, wherein the prism meets a relational expression $\sin 2\theta_1 \gg 1/n$, wherein $\theta_1$ is the first included angle, and n is a refractive index of the prism.

3. The lens assembly according to claim 1 or 2, wherein at least one of the first lens group, the second lens group, and the prism is able to move along a preset direction, and the preset direction is parallel to an optical axis direction of the first lens group and an optical axis direction of the second lens group.

4. The lens assembly according to any one of claims 1 to 3, wherein the prism is an isosceles triangle prism or an isosceles trapezoid prism.

5. The lens assembly according to any one of claims 1 to 4, wherein the first reflection film is a metal reflection film or a dielectric reflection film, and the second reflection film is a metal reflection film or a dielectric reflection film.

6. The lens assembly according to any one of claims 1 to 5, wherein the first lens group has a positive focal power.

7. The lens assembly according to any one of claims 1 to 6, wherein a lens that is in the first lens group and that is closest to the object side has a positive focal power, and an object-side surface of the lens is a convex surface.

8. The lens assembly according to any one of claims 1 to 7, wherein the first lens group meets a relational expression $0.05 « TTL1/f « 0.3$, wherein TTL1 is a total optical length of the first lens group, and f is a focal length of the lens assembly.

9. The lens assembly according to any one of claims 1 to 8, wherein the first lens group meets a relational expression $0.5 « L/TTL1 « 3$, wherein L is a relative maximum movement amount of the first lens group and the second lens group at different object distances.

10. The lens assembly according to any one of claims 1 to 9, wherein the second lens group meets a relational expression $0.05 « TTL2/f « 0.3$, wherein TTL2 is a total optical length of the second lens group.

11. The lens assembly according to any one of claims 1 to 10, wherein the first lens group comprises at least two lenses that have focal powers, and the second lens group comprises at least one lens that has a focal power.

12. A camera module, comprising at least an image sensor and the lens assembly according to any one of claims 1 to 11, wherein the image sensor is located on a side that is of the second lens group of the lens assembly and that faces the image side.

13. An electronic device, comprising at least a housing and the camera module according to claim 12, wherein the camera module is disposed on the housing.

FIG. 1

FIG. 2

10

L1

Object side

L2

Image side

12

13

11

111

113

First surface

θ₁

θ₂

115

114

Third surface

Second surface

FIG. 3

112

Third surface

Second surface

First surface

FIG. 4

FIG. 5

112

Second surface

Third surface

$\theta_1$

$\theta_2$

First surface

FIG. 6

112

Second surface

Third surface

$\theta_1$

$\theta_2$

First surface

FIG. 7

FIG. 8

FIG. 9

FIG. 10

## INTERNATIONAL SEARCH REPORT

| International application No. |
|---|
| **PCT/CN2023/128759** |

### A. CLASSIFICATION OF SUBJECT MATTER

G02B13/00(2006.01)i; G02B 17/04(2006.01)i; G02B 5/04(2006.01)i; G03B30/00(2021.01)i; G03B17/12(2021.01)i; G03B17/17(2021.01)i; G02B3/14(2006.01)n; G03B5/00(2021.01)n; H04N5/00(2011.01)n; H04M1/02(2006.01)n

According to International Patent Classification (IPC) or to both national classification and IPC

### B. FIELDS SEARCHED

Minimum documentation searched (classification system followed by classification symbols)

IPC: G02B13/-、G02B17/-、G02B5/-、G03B30/-、G03B17/-、G02B3/-、G03B5/-、H04N5/-、H04M1/-; CPC: G02B13/0065、G02B13/001、G02B13/009

Documentation searched other than minimum documentation to the extent that such documents are included in the fields searched

Electronic data base consulted during the international search (name of data base and, where practicable, search terms used)

CNABS, CNTXT, ENTXTC, USTXTC, VEN, CNKI, Web of science: 华为技术有限公司, 周勇, 陈洪福; 棱镜, 折转, 折光, 折叠, 转向, prism?; 三, 多, 若干; 反射, 反光, 全反, 内反, TIR, reflect+; 摄像, 相机, 拍摄, 照相, 成像, 图像, 照片, 影像; 焦距, focal 1w length, focal 1w distance

### C. DOCUMENTS CONSIDERED TO BE RELEVANT

| Category* | Citation of document, with indication, where appropriate, of the relevant passages | Relevant to claim No. |
|---|---|---|
| X | CN 115327748 A (KUNSHAN Q TECHNOLOGY CO., LTD.) 11 November 2022 (2022-11-11)<br>description, paragraphs [0002]-[0084], and figures 1-11 | 1-8, 11-13 |
| X | CN 115327743 A (KUNSHAN Q TECHNOLOGY CO., LTD.) 11 November 2022 (2022-11-11)<br>description, paragraphs [0002]-[0127], and figures 1-25 | 1-8, 11-13 |
| X | CN 101846803 A (OLYMPUS CORP.) 29 September 2010 (2010-09-29)<br>description, paragraphs [0002]-[0083], and figures 1-11 | 1-7, 11-13 |
| X | JP 2000019450 A (MATSUSHITA ELECTRIC INDUSTRIAL CO., LTD.) 21 January 2000 (2000-01-21)<br>description, paragraphs [0002]-[0046], and figures 1-10 | 1-7, 11-13 |
| X | JP 2001142024 A (MATSUSHITA ELECTRIC INDUSTRIAL CO., LTD.) 25 May 2001 (2001-05-25)<br>description, paragraphs [0002]-[0135], and figures 1-13 | 1-7, 11-13 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 January 2024** | **16 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/128759**

### C.     DOCUMENTS CONSIDERED TO BE RELEVANT

| Category* | Citation of document, with indication, where appropriate, of the relevant passages | Relevant to claim No. |
|---|---|---|
| X | JP 2001174746 A (MATSUSHITA ELECTRIC INDUSTRIAL CO., LTD.) 29 June 2001 (2001-06-29) <br> description, paragraphs [0002]-[0126], and figures 1-11 | 1-7, 11-13 |
| X | US 2001027125 A1 (MATSUSHITA ELECTRIC INDUSTRIAL CO., LTD.) 04 October 2001 (2001-10-04) <br> description, paragraphs [0002]-[0211], and figures 1-28 | 1-7, 11-13 |
| A | CN 115327747 A (KUNSHAN Q TECHNOLOGY CO., LTD.) 11 November 2022 (2022-11-11) <br> entire document | 1-13 |
| A | CN 211554611 U (NANCHANG O-FILM OPTICAL-ELECTRONIC TECHNOLOGY CO., LTD.) 22 September 2020 (2020-09-22) <br> entire document | 1-13 |

Form PCT/ISA/210 (second sheet) (July 2022)

## INTERNATIONAL SEARCH REPORT
### Information on patent family members

International application No.

**PCT/CN2023/128759**

| Patent document cited in search report | | | Publication date (day/month/year) | Patent family member(s) | | | Publication date (day/month/year) |
|---|---|---|---|---|---|---|---|
| CN | 115327748 | A | 11 November 2022 | None | | | |
| CN | 115327743 | A | 11 November 2022 | CN | 218272884 | U | 10 January 2023 |
| | | | | CN | 219370036 | U | 18 July 2023 |
| | | | | CN | 219370111 | U | 18 July 2023 |
| CN | 101846803 | A | 29 September 2010 | US | 2010245211 | A1 | 30 September 2010 |
| | | | | US | 8305296 | B2 | 06 November 2012 |
| | | | | JP | 2010224473 | A | 07 October 2010 |
| | | | | JP | 5389492 | B2 | 15 January 2014 |
| JP | 2000019450 | A | 21 January 2000 | None | | | |
| JP | 2001142024 | A | 25 May 2001 | None | | | |
| JP | 2001174746 | A | 29 June 2001 | None | | | |
| US | 2001027125 | A1 | 04 October 2001 | JP | 2001264681 | A | 26 September 2001 |
| | | | | JP | 3921915 | B2 | 30 May 2007 |
| | | | | US | 6952598 | B2 | 04 October 2005 |
| CN | 115327747 | A | 11 November 2022 | None | | | |
| CN | 211554611 | U | 22 September 2020 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211661120